Europäisches Patentamt

European Patent Office

Office européen des brevets

(19)

(11) **EP 1 365 527 A1**

(12) **EUROPÄISCHE PATENTANMELDUNG**

(43) Veröffentlichungstag:
26.11.2003 Patentblatt 2003/48

(51) Int Cl.⁷: **H04B 10/158**

(21) Anmeldenummer: 02360102.4

(22) Anmeldetag: **25.03.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ALCATEL**
**75008 Paris (FR)**

(72) Erfinder: **Pfeiffer, Thomas, Dr.**
**70569 Stuttgart (DE)**

(74) Vertreter: **Menzietti, Domenico, Dipl.-Ing et al**
**Alcatel**
**Intellectual Property Department, Stuttgart**
**70430 Stuttgart (DE)**

(54) **Optischer CDMA Empfänger**

(57) Es ist eine Aufgabe der Erfindung, einen optischen Empfänger für ein OCDM-Netzwerk sowohl individuell adressierbar als auch als Teil einer Gruppe von optischen Empfängern adressierbar auszugestalten.

Der erfindungsgemäße optische Empfänger zeichnet sich insbesondere dadurch aus, dass er eine Reihenschaltung aus zwei optischen Filtern aufweist, wobei die Perioden der Filter unterschiedlich ausgestaltet sind. Die eine Periode dient dem Empfang von Broad-cast-Signalen. Durch die Wahl dieser Periode auf der Sendeseite kann eine Gruppe von optischen Empfängern, die jeweils ein Filter mit dieser Periode beinhalten, ausgewählt werden und dieser Gruppe ein Datensignal gleichzeitig übermittelt werden. Die andere Periode dient zur Steuerung des Empfangs von Empfängerindividuellen Signalen, wobei die Summe und/oder die Differenz beider Perioden zum Empfang der individuellen Signalen verwendet wird.

**Beschreibung**

Die Erfindung betrifft einen optischer Empfänger für ein OCDM-Netzwerk.

Ein optischer Empfänger beinhaltet üblicherweise ein optisches Filter und einen nachgeschalteten opto-elektrischen Empfänger, der z.B. als Differenzverstärker ausgeführt ist.

Optische Filter werden in optischen Systemen z.B. zur Kodierung und Dekodierung von optischen Signalen verwendet, so z.B. beim OCDM, das auch als OCDMA bezeichnet wird; OCDM = Optical Code Division Multiplex, OCDMA=Optical Code Division Multiple Access. Eine Art von OCDM basiert auf spektraler Kodierung von breitbandigen optischen Quellen. Das Licht einer mit zu übertragenden Daten modulierten LED wird beispielsweise durch ein optisches Filter geleitet und auf diese Weise kodiert; LED=Light Emitting Diode. Mehrere dieser LED und optische Filter Kombinationen werden auf der Sendeseite z.B. über einen optischen Koppler mit einem EDFA verbunden, der mit einer optischen Glasfaserleitung verbunden ist; EDFA=Erbium Doped Fibre Amplifier. Auf diese Art und Weise werden unterschiedlich kodierte optische Signale generiert, die gemeinsam verstärkt über die Glasfaser übertragen werden. Über optische Splitter kann eine Übertragung zu mehreren Empfangsseiten erfolgen. Jede Empfangsseite beinhaltet beispielsweise einen differentiellen Empfänger mit einem entsprechenden optischen Filter zur Dekodierung der für die Empfangsseite bestimmten optischen Signale.

Ein optisches Filter ist beispielsweise als Mach-Zehnder-Filter ausgeführt. Im Mach-Zehnder-Filter wird das empfangene OCDM-Signal über zwei Pfade weitergeleitet, die komplementäre Übertragungsfunktionen aufweisen. Das Mach-Zehnder-Filter kann sowohl zur Kodierung als auch zur Dekodierung von OCDM-Signalen verwendet werden.

Auf der Sendeseite wird z.B. pro optischem Übertragungskanal ein optisches Filter verwendet. Die optischen Filter verschiedener Kanäle müssen gegeneinander gut verstimmt sein, um z.B. ein Übersprechen zu reduzieren. Auf der Empfangsseite wird z.B. ein optisches Filter verwendet, das auf den optischen Übertragungskanal abgestimmt wird, der für die Empfangsseite vorgesehen ist. Alternativ wird auf der Empfangsseite z.B. die gleiche Anzahl von optischen Filtern verwendet wie auf der Sendeseite. Die optischen Filter auf der Empfangsseite sind auf die optischen Filter auf der Sendeseite abgestimmt.

Es ist eine Aufgabe der Erfindung, einen optischen Empfänger für ein OCDM-Netzwerk sowohl individuell adressierbar als auch als Teil einer Gruppe von optischen Empfängern adressierbar auszugestalten.

Gelöst wird diese Aufgabe durch einen optischen Empfänger gemäß Anspruch 1.

Der erfindungsgemäße optische Empfänger zeichnet sich insbesondere dadurch aus, dass er eine Reihenschaltung aus z.B. zwei optischen Filtern aufweist, wobei die Perioden der Filter unterschiedlich ausgestaltet sind. Die eine Periode dient dem Empfang von Broadcast- oder Multicast-Signalen. Durch die Wahl dieser Periode auf der Sendeseite kann eine Gruppe von optischen Empfängern, die jeweils ein Filter mit dieser Periode beinhalten, ausgewählt werden und dieser Gruppe ein Datensignal gleichzeitig übermittelt werden. Die andere Periode dient zur Steuerung des Empfangs von Empfänger-individuellen Signalen, wobei im einfachsten Fall die Summe und/oder die Differenz beider Perioden zum Empfang der individuellen Signalen verwendet wird.

Durch den Einsatz einer einfachen Filterstruktur aus zwei optischen Filtern kann auf einfache Art und Weise die Funktionalität eines OCDM-Netzwerks ausgebaut werden. Innerhalb des Netzwerks können Gruppen von optischen Empfängern definiert werden, denen Signale sowohl im Broadcast- und/oder Multicast-Verfahren als auch im Individualverkehr zugeleitet werden können. Im Vergleich zum Stand der Technik, bei dem das Broadcast-Verfahren durch Übermittlung von gleichen Individual-Signalen an alle Empfänger einer Gruppe simuliert werden kann, wird bei der Erfindung durch eine einzige Übermittlung im Broadcast-Verfahren erheblich Übertragungskapazität eingespart, z.B. bei einer Gruppe von zehn Empfängern 90%. Die Gruppe kann alle angeschlossenen optischen Empfänger beinhalten oder auch nur einen Teil. Es können z.B. zwei, drei oder mehr Gruppen aus der Gesamtheit der angeschlossenen optischen Empfänger gebildet werden.

Im folgenden wird ein Ausführungsbeispiel der Erfindung unter Zuhilfenahme einer Figur erläutert.

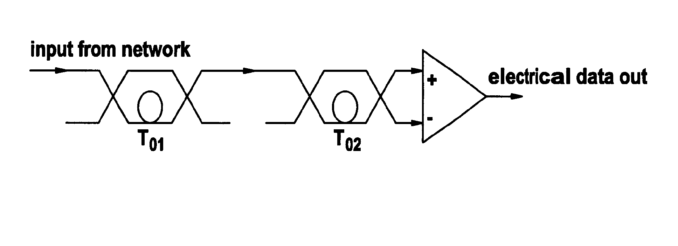

Die Figur zeigt einen erfindungsgemäßen optischen Empfänger. Dieser beinhaltet eine Reihenschaltung aus einem ersten optischen Filter, einem zweiten optischen Filter und einem opto-elektrischen Empfänger, wobei die beiden optischen Filter unterschiedliche Perioden aufweisen, und wobei eine Periode zum Empfang von Broadcast-Signalen und die Summe und/oder die Differenz beider Perioden zum Empfang von individuellen Signalen dient. Die optischen Filter sind z.B. als Mach-Zehnder Filter ausgeführt. Der opto-elektrische Empfänger ist z.B. als opto-elektrischer Differenzverstärker ausgeführt ist.

Der optische Empänger ist gekennzeichnet durch folgende Übertragungsfunktion:

$$\Delta H_{Rx}(\nu) = \frac{1}{2}\left\{ \cos\left[2\pi\,\nu\,T_{02}\right] + \frac{1}{2}\cos\left[2\pi\,\nu\,(T_{01} - T_{02})\right] + \frac{1}{2}\cos\left[2\pi\,\nu\,(T_{01} + T_{02})\right] \right\}$$

wobei $T_{01}$ und $T_{02}$ den Perioden der optischen Filter entsprechen und wobei $T_{02}$ zum Empfang von Broadcast- oder Multicast-Signalen und $T_{01} + T_{02}$ und/oder $T_{01} - T_{02}$ zum Empfang von individuellen Signalen dient. Die Übertragungsfunktion ist die effektive Empfangsfilterfunktion, die bereits den opto-elektrischen Empfänger mit beinhaltet. Beim Broadcast- und beim Multicast-Verfahren wird vom ersten Cosinus-Term Gebrauch gemacht, beim Individual-Empfang vom zweiten und/oder dritten. Auf der Sendeseite wird für Broadcast ein optisches Filter mit Periode $T_{02}$ verwendet, für Multicast mehrere optische Filter mit unterschiedlichen Perioden $T_{02}$ ,$T_{02'}$, $T_{02''}$, etc., für Individual-Verkehr jeweils ein optisches Filter mit Periode $T_{01} + T_{02}$, $T_{01} - T_{02}$ oder mit beiden Termen.

Der optische Empfänger wird in ein OCDM-Netzwerk eingebaut. Ein solches OCDM-Netzwerk beinhaltet z. B. mindestens einen optischen Sender und mindestens zwei erfindungsgemäße optische Empfänger, die über optische Leitungen miteinander verbunden sind, wobei mindestens zwei der optischen Empfänger jeweils ein Filter mit der gleichen Periode und ein Filter mit einer individuellen Periode aufweisen. Die optischen Empfänger einer Gruppe beinhalten somit ein erstes optisches Filter dessen Periode der Periode der ersten optischen Filter der übrigen optischen Empfänger entspricht. Des weiteren beinhalten alle optischen Empfänger jeweils ein zweites optisches Filter dessen Periode für jeden optischen Empfänger individuell ist. Die Reihenschaltung von erstem und zweitem optischen Filter kann auch als Kaskadierung bezeichnet werden.

Sowohl Broadcast-Signale als auch Multicast-Signale dienen beispielsweise zum Zwecke der Signalisierung, Übermittlung von TV-Signalen und/oder dem Netzwerk-Management. Individual-Signale können auch als Unicast-Signale bezeichnet werden und dienen z.B. der Übertragung von Internet-Daten und/oder Telefonsignalen.

Der erfindungsgemäße optische Empfänger ermöglicht eine einfache Implementierung. Optisches Filter mit Periode $T_{02}$ und opto-elektrischer Empfänger können auf einem einzigen Bauelement, z.B. hybride integrierte Schaltung, integriert werden, da die Periode $T_{02}$ für alle optischen Empfänger einer Gruppe gleich ist. Dadurch kann der Signalpegel und die Verzögerung auf der Verbindungsstrecke zwischen optischem Filter und opto-elektrischen Empfänger durch ein entsprechendes Design optimiert werden. Durch die Verwendung des optischen Filters mit individueller und einstellbarer Periode $T_{01}$ wird der optische Empfänger komplettiert. Somit sind kostengünstige, für die Massenproduktion geeignete optische Empfänger herstellbar.

In einer beispielhaften Ausgestaltung unterscheiden sich die FSR Einstellbereiche des ersten und des zweiten optischen Filters mindestens um den Faktor zehn voneinander; FSR = Free Spektral Range. FSR wird über die Periode T0=1/FSR definiert. Das erste und das zweite optische Filter sind jeweils z.B. als Filter mit periodischer Übertragungsfunktion, z.B. als FIR- oder IIR-Filter, ausgeführt. Das erste optische Filter ist z.B. als Mach-Zehnder-Filter oder als Fabry-Perot-Filter ausgeführt und das zweite optische Filter z.B. als Mach-Zehnder-Filter.

Beim Ausführungsbeispiel ist die Anzahl der Filter oder zumindest der Filterfunktionalitäten in einem erfindungsgemäßen optischen Empfänger gleich zwei. Anstelle von zwei optischen Filtern können in einem erfindungsgemäßen optischen Empfänger auch drei oder mehr optische Filter in Reihe geschaltet sein. Im Falle von drei Filtern dient das erste z.B. dem Empfang von Broadcast-Signalen, die für alle optischen Empfänger bestimmt sind, das zweite Filter dem Empfang von Multicast-Signalen, die für einer Gruppe der optischen Empfänger bestimmt ist und das dritte Filter bzw. dessen Periode in einer algebraischen Kombination mit einer oder beiden Perioden des ersten und/oder zweiten Filters dem Empfang von Individual-Signalen.

## Patentansprüche

1.  Optischer Empfänger für ein OCDM Netzwerk, beinhaltend eine Reihenschaltung aus einer optischen Filteranordnung und einem opto-elektrischen Empfänger, wobei die optische Filteranordnung mindestens zwei unterschiedliche Perioden aufweist, und wobei eine Periode zum Empfang von Broadcast- oder Multicast-Signalen und eine algebraische Verknüpfung, insbesondere die Summe und/oder die Differenz mindestens zweier Perioden zum Empfang von individuellen Signalen dient.

2.  Optischer Empfänger nach Anspruch 1, **dadurch gekennzeichnet, dass** die optische Filteranordnung eine Reihenschaltung aus mindestens zwei optischen Filtern beinhaltet, wobei mindestens zwei optische Filter unterschiedliche Perioden aufweisen, und wobei eine Periode zum Empfang von Broadcast- oder Multicast-Signalen und eine algebraische Verknüpfung, insbesondere die Summe und/oder die Differenz mindestens zweier Perioden zum Empfang von individuellen Signalen dient.

**3.** Optischer Empfänger nach Anspruch 1, **gekennzeichnet durch** folgende Übertragungsfunktion:

$$\Delta H_{Rx}(\nu) = \frac{1}{2}\left\{\cos[2\pi\nu\,T_{02}] + \frac{1}{2}\cos[2\pi\nu\,(T_{01} - T_{02})] + \frac{1}{2}\cos[2\pi\nu\,(T_{01} + T_{02})]\right\}$$

wobei $T_{01}$ und $T_{02}$ den beiden Perioden einer optischen Filteranordnung mit zwei optischen Filtern entsprechen und wobei $T_{02}$ zum Empfang von Broadcast- oder Multicast-Signalen und $T_{01} + T_{02}$ und/oder $T_{01} - T_{02}$ zum Empfang von individuellen Signalen dient.

**4.** Optischer Empfänger nach Anspruch 1, **dadurch gekennzeichnet, dass** die optische Filteranordnung eine Reihenschaltung aus drei optischen Filtern beinhaltet, wobei die drei optischen Filter drei unterschiedliche Perioden aufweisen, und wobei eine erste Periode zum Empfang von Broadcast-Signalen dient, eine zweite Periode zum Empfang von Multicast-Signalen und eine algebraische Verknüpfung aus einer dritten Periode mit der ersten und/ oder der zweiten Periode zum Empfang von individuellen Signalen dient.

**5.** Optischer Empfänger nach Anspruch 1, **dadurch gekennzeichnet, dass** der opto-elektrische Empfänger als opto-elektrischer Differenzverstärker ausgeführt ist.

**6.** OCDM Netzwerk beinhaltend mindestens einen optischen Sender und mindestens zwei optische Empfänger nach Anspruch 1, die über optische Leitungen miteinander verbunden sind, wobei mindestens zwei der optischen Empfänger jeweils ein Filteranordnung mit der gleichen und mit mindestens einer individuellen Periode aufweisen.

input from network

$T_{01}$    $T_{02}$    electrical data out

**Europäisches Patentamt**

**EUROPÄISCHER RECHERCHENBERICHT**

Nummer der Anmeldung

EP 02 36 0102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 215 573 B1 (PFEIFFER THOMAS) 10. April 2001 (2001-04-10) * Spalte 2, Zeile 59 – Spalte 3, Zeile 2 * * Spalte 3, Zeile 7 – Zeile 11 * * Spalte 3, Zeile 26 – Zeile 35 * * Abbildung 3 * | 1 | H04B10/158 |
| A | LAM CEDRIC F ET AL.: PROCEEDINGS OF THE 1998 CONFERENCE ON LASERS AND ELECTRO-OPTICS, CLEO'98, 3. – 8. Mai 1998, Seite 455 XP002211340 San Francisco, CA, USA * Abbildungen 1,2A * | 1 | |
| A | MOELLER L: "AN OPTICAL CDMA METHOD BASED ON PERIODIC SPECTRUM ENCODING" PROCEEDINGS OF THE ANNUAL CONFERENCE ON EUROPEAN FIBRE OPTIC COMMUNICATIONS AND NETWORKS (EFOC), XX, XX, 27. Juni 1995 (1995-06-27), Seiten 178-181, XP000672568 * Abbildung 1 * | 1 | |

RECHERCHIERTE SACHGEBIETE (Int.Cl.7)

H04B

Der vorliegende Recherchenbericht wurde für alle Patentansprüche erstellt

| Recherchenort | Abschlußdatum der Recherche | Prüfer |
|---|---|---|
| DEN HAAG | 28. August 2002 | Cochet, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 02 36 0102

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 6215573 | B1 | 10-04-2001 | DE | 19722560 A1 | 03-12-1998 |
| | | | CA | 2235769 A1 | 28-11-1998 |
| | | | EP | 0881789 A2 | 02-12-1998 |
| | | | JP | 11032029 A | 02-02-1999 |

EPO FORM P0461